Europäisches Patentamt

European Patent Office

Office européen des brevets

(19)

(11) Publication number: **0 173 582**
A2

# EUROPEAN PATENT APPLICATION

(21) Application number: 85306185.1

(22) Date of filing: 30.08.85

(51) Int. Cl.⁴: **G 02 B 6/44**

(30) Priority: 31.08.84 US 646185

(43) Date of publication of application: 05.03.86
Bulletin 86/10

(84) Designated Contracting States: **DE FR GB IT NL SE**

(71) Applicant: **Olin Corporation, 427 North Shamrock Street,
East Alton Illinois 62024 (US)**

(72) Inventor: **Winter, Joseph, 88 Vista Terrace, New Haven
Connecticut 06515 (US)**
Inventor: **Pryor, Michael J., 98 Maplevale Drive,
Woodbridge Connecticut 06525 (US)**

(74) Representative: **Lambert, Hugh Richmond et al, D.
YOUNG & CO. 10 Staple Inn, London, WC1V 7RD (GB)**

(54) Heavy wall optical fiber cable.

(57) The present invention relates to an optical fiber cable
assembly (12) having a heavy wall tubular structure for im-
parting improved strength properties and current carrying
capabilities to the cable assembly. The heavy wall tubular
structure is formed by two or more drawn tubes (14, 50)
bonded together by a low temperature metal or metal alloy
filler material (47) and is used to protect one or more optical
fibers (26). A process and apparatus for forming the cable
assembly are also described.

# HEAVY WALL OPTICAL FIBER CABLE

The present invention relates to optical fiber cable assemblies for communication applications.

Optical fiber cables are generally designed with specific uses in mind. For example, many underground and undersea cable constructions are designed to have an optical fiber or fibers housed within at least one metal tube. The tube or tubes are primarily intended to serve as protective structures, however, they may actually have a variety of functions. For example, in cable constructions having a plurality of coaxial tubes, one tube may act as a strength member while another tube serves as a water barrier. In others, each tube may serve as a strength member. U.S. Patent Nos. 4,359,598 to Dey et al., 4,367,917 to Gray, 4,416,508 to Dey et al. and 4,432,605 to Niiro et al. illustrate some of the optical fiber cable constructions known in the art.

In yet another cable construction, a plurality of coaxial metal tubes are spaced apart by a non-metallic or dielectric material so that one or more of the tubes may be used as an electrical conductor. U.S. Patent Nos. 4,239,336 to Parfree et al. and 4,278,835 to Jackson and U.K. Patent No. 1,172,272 to Kao et al. illustrate cable constructions where one or more of the tubes in which the optical fiber or fibers are housed are used as electrical conductors.

Often, the optical fiber cable assembly which can be manufactured and its fitness for a particular purpose are limited by the fabricating techniques available to and/or used by the manufacturer. For example, in some cable constructions, one or more of the metal encapsulated tubes are formed from a spirally or helically wound metal tape.  U.S. Patent Nos.
4,349,243 to Amano et al. and 4,375,313 to Anderson
et al. illustrate such cable constructions.  While
these spirally or helically wound tubular members
are suitable for transmitting electrical power,
they generally do not have sufficient strength to
be used in certain environments i.e. undersea
without additional strength structures.  Other
problems with this type of cable construction are
the great potential for cable failure, particularly
in the torsion plane, and the inability to provide
these cable constructions with a high degree of
hermeticity because of the space between wraps that
needs to be filled with a sealing material.  This
latter problem severely limits the use of this type
of cable in environments where there is a great
degree of moisture.  From a manufacturing
standpoint, there is also the problem of a
substantial risk of kinking the optical fiber or
fibers during the wrapping operation.

Recently, techniques for forming an optical
fiber cable having one or more drawn, metallic
encapsulation tubes have been developed.  In one
such technique, each of the metal tubular members
is formed by pulling a metal or metal alloy strip
material through at least one forming die in such a
manner that a tube having a substantially closed,
generally longitudinally extending seam, a wall
thickness substantially equal to the initial
thickness of the strip material, and a length
greater than the original strip material length is
formed.  These tube characteristics distinguish the
tube formed by this technique from tubes formed
using other die forming techniques.  U.S. Patent
Nos. 4,508,423 and 4,477,147, both to Winter et al.
illustrate this cable forming technique and several variations thereof.

While this die forming technique has been found to quite suitable for forming optical fiber cable assemblies having improved strength, electrical conductivity and hermeticity properties, it does have certain limitations. For example, the maximum wall thickness which can be imparted to the formed tube is limited by the energy required to form the tube, the frictional forces created in the tube forming die or dies, and the yield strength of the particular strip material. As a consequence, it has not always been possible to meet a set of desired dead load strength targets. This problem has been overcome in the past by increasing the strength of the cable with secondary members such as plastic filament and/or steel wire outer coatings.

Another limitation of this technique has been the trade-off of strength for conductivity in those cable constructions where one or more of the metal tubes are to be used as an electrical conductor. In the past, the tube or tubes which are to act as electrical conductors have been formed from high conductivity alloys such as copper alloy 151, a copper-zirconium alloy manufactured and sold by Olin Corporation. The use of such high conductivity alloys has generally meant a sacrifice in yield strength. As a consequence, the wall thickness and cross sectional area of the formed tube has been smaller than desired. Tubes having these smaller wall thicknesses and cross sectional areas are generally unable to carry the desired amount of current. To overcome this problem, auxiliary copper wires have been included in the cable assembly.

0173582
15070-MB

In accordance with the present invention, these problems are overcome by providing an optical fiber cable assembly having at least one metallic tubular member with an increased wall thickness. A process and apparatus for manufacturing such a cable assembly are also described herein.

The improved optical fiber cable fabrication technique of the present invention comprises forming a first metal or metal alloy tube having a generally longitudinally extending substantially closed seam and inserting at least one optical fiber into the forming tube. The metal or metal alloy tube is then coated with a substantially uniform layer of a sealing material, such as a solder or a brazing material, having a lower melting point than the melting point of the metal or metal alloy forming the tube. As well as coating the tube, the sealing material substantially fills the tube seam so as to provide a hermetic structure. After application of the coating layer, a second metal or metal alloy tube, preferably having a generally longitudinally extending substantially closed seam, is fabricated about the coated first tube. Thereafter, the seam in the second tube is hot sealed with an appropriate sealing material. During this second sealing step, the coating about the first tube is caused to remelt and bond the first and second tubes together to form a unitary tubular structure having the desired increased wall thickness for providing the desired strength and current carrying capability.

In a preferred embodiment of the present invention, each of the tubes is formed by pulling a metal or metal alloy strip through one or more tube forming dies. By using this tube forming

0173582

technique, it is possible to form a tube with a substantially closed seam that facilitates the seam sealing operation and imparts improved hermeticity properties. Improved hermeticity is also obtained by fabricating the second tube so that its seam is about 180$^\circ$ offset from the seam of the first tube. The technique used herein to seal each tube seam preferably comprises passing each tube assembly through a bath or wave of molten sealing material. In a preferred embodiment, each tube is passed through a wave soldering apparatus to effect sealing.

Another advantage to the cable fabricating technique of the present invention is that the cable assemblies produced thereby may have tubular structures with almost any desired strength or cross sectional area for current carrying. This can be provided by forming the tubular structure from any number of joined together drawn tubes.

The invention is further described with reference to the accompanying drawings, in which:

Figure 1 is a schematic representation of an apparatus for assembling an optical fiber cable in accordance with the present invention.

Figure 2 is a cross sectional view of an optical fiber cable formed in accordance with the present invention.

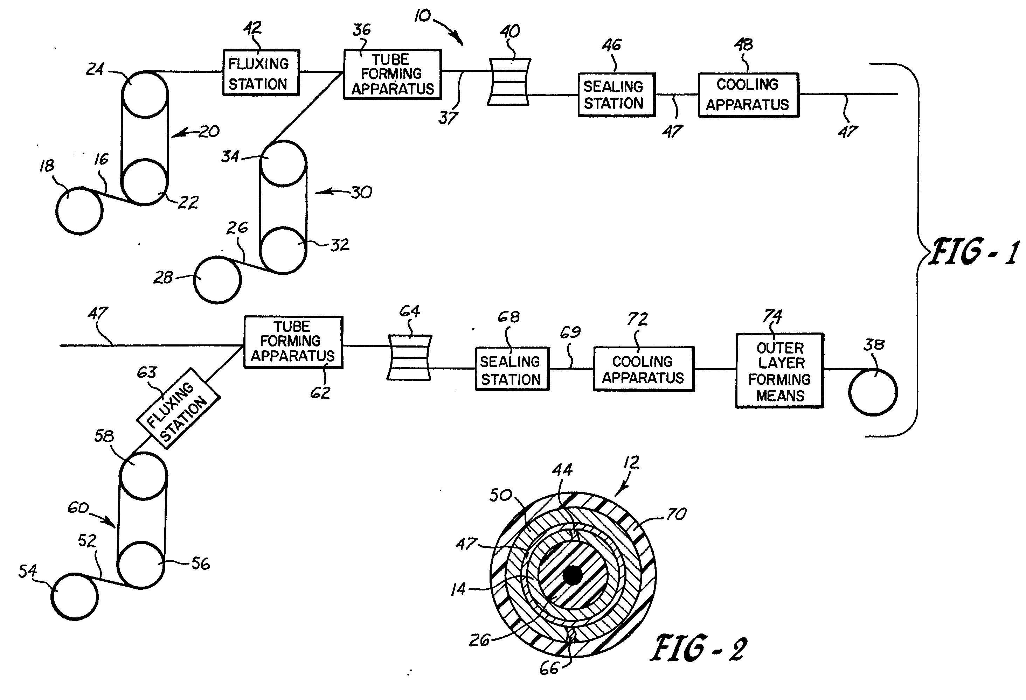

Referring now to Figure 1, a system 10 for fabricating an optical fiber cable 12 in accordance with the present invention is illustrated. While the various components of the system have been illustrated as being in-line so that the cable can be formed in a continuous fashion, it should be recognized that the various components may be arranged in separate lines so that the cable can be formed in a piecemeal fashion if so desired. To form the innermost tube 14, a metal or metal alloy tape 16 is first payed off a reel 18 and wound about an accumulator 20. The purpose of the accumulator 20 is to permit accumulation of a length of tape material sufficient to assure a substantially constant tape delivery to the downstream cable forming apparatus. The accumulator 20 may comprise any conventional accumulator known in the art. In a preferred configuration, it has a plurality of sheaves 22 and 24 which can move towards and away from each other and about which one or more turns of the tape 16 are wound. Where assuring a substantially constant tape delivery to the downstream cable forming apparatus is not a significant concern, the accumulator 20 may be omitted.

The optical fiber 26 to be inserted into the innermost tube 14 may comprise any commercially available buffered optical fiber. Generally, such a fiber consists of an optical grade glass having an approximate diameter of about 0.001" (25.4μm) coated by one or more layers of a buffer material such as nylon, polyvinyl formal, fluoroethylenepropylene copolymers, polyethylene, other acrylic materials and a coating sold under the trademark HYTREL by duPont. While any suitable optical fiber known in the art may be encapsulated, it is preferred to use one that is capable of withstanding for short periods of time the temperatures associated with the sealing processes to be described hereinafter.

The optical fiber 26 to be inserted into the tube 14 is payed off a reel 28 and wrapped around an accumulator 30. Accumulator 30 may comprise any suitable accumulator known in the art. Here again, it is preferred that the accumulator have at least two sheaves 32 and 34 capable of moving towards and away from each other. By having such an arrangement, the optical fiber 26 can be provided with sufficient slack that any risk of forming kinks or snags in the fiber is substantially eliminated. The accumulator 30 also insures that there is a sufficient supply of optical fiber 26 to travel along with the tape material during the tube forming operations and permits application of a back tension to the fiber 26 if desired. The number of fiber wraps about the accumulator 30 in part determines the amount of back tension applied to the fiber 26. If desired, a weight not shown may be applied to the sheave 32 to apply a desired amount of back tension to the optical fiber.

While Figure 1 illustrates only a single optical fiber 26 being fed into the tube forming apparatus 36, it is within the purview of the present invention to encapsulate more than one optical fiber within the tube 14. The fibers may be inserted separately, each being wrapped about its own accumulator not shown, or as a preformed composite of optical fibers e.g., a rope of optical fibers.

The innermost tube 14 is preferably formed by drawing or pulling the tape material 16 through a suitable tube forming apparatus 36. While the tube forming apparatus 36 may comprise any conventional tube forming system known in the art, it is preferred to use one that forms a tube having a substantially closed, generally longitudinally extending seam 44. In a preferred embodiment, the tube forming apparatus 36 comprises one or more tube forming dies. Where the tube forming apparatus 36 comprises a single tube forming die, it is preferred that the die not shown be capable of forming the tape material 16 into a tube 14 that closely surrounds and circumferentially encapsulates the fiber or fibers 26. Where the tube forming apparatus comprises a plurality of sequential dies, not shown, one or more of the dies may form an open tube section not shown that only partially encapsulates the fiber or fibers 26. The final die in such a sequential die tube forming apparatus should be capable of closing the open tube section about the fiber or fibers and forming the desired seam configuration. Suitable tube forming die arrangements which can be used for the apparatus 36 are disclosed in the aforementioned Winter et al. patents.

Simultaneous with the tape material 16 being fed into the tube forming apparatus 36, the fiber or fibers 26 are preferably being fed into the apparatus 36 in such a manner that the tube 14 is formed about the fiber or fibers. This can be accomplished in any number of ways. For example, an end of the fiber or fibers 26 may be joined to an end of the tape material 16 and pulled through the apparatus 36 by a tensioning device such as a take-up reel 38. Alternatively, the tube assembly 37 formed by the apparatus 36 and containing the fiber or fibers 26 may be wound about a driven capstan 40 so that a pull force is applied to the tube assembly 37, the tape material 16 and the fiber or fibers 26 by the capstan. In this arrangement, the pull force applied to the tube assembly 37 is transmitted to the fiber or fibers 26 by the frictional engagement between the buffer material surrounding each fiber and the inner tube wall.

Prior to pulling the tape material 16 through the tube forming appparatus 36, it has been found to be desirable to clean the tape material to remove any particulate matter which may interfere with smooth operation of the tube forming apparatus. In addition, it has been discovered that some cleaning techniques assist in reducing the frictional forces developed in the tube forming apparatus. While any suitable cleaning technique known in the art may be used to clean the tape material 16, the selected cleaning technique will primarily depend upon the particular metal or metal alloy to be cleaned. Cleaning of the tape material 16 may occur in-line or off-line.

It has also been found to be desirable to pull the tape material 16 through a fluxing station 42 prior to the tube forming operation. The fluxing station 42 may comprise any suitable apparatus known in the art for applying a small amount of flux lubricant to that tape surface which contacts the tube forming apparatus and which forms the outer periphery of the tube 14. The primary purpose of the flux lubricant is to reduce the frictional forces created during the tube forming operation. Additionally, it has been found that application of a flux lubricant assists in protecting the surface forming the outer periphery of the tube 14 so that its solderability is not diminished. While any suitable flux lubricant known in the art may be applied to the tape material 16, it is preferred to use one that is water soluble to faciliate its removal prior to the seam sealing operation. Obviously, where the tape material is passed through both a cleaning apparatus not shown and the flux applying station 42, it is desirable to pass it through the cleaning apparatus first.

After the tube assembly 37 with the encapsulated fiber or fibers 26 exits the tube forming apparatus 36, it is passed to a station 46 for sealing the seam 44 and coating the outer periphery of the tube with a substantially uniform coating 47 of a metal or metal alloy having a lower melting point than the melting point of the tape material. The reasons for providing such a coating will become apparent hereinafter. Station 46 may comprise any suitable means known in the art for applying such a sealing material to the tube seam and the tube outer periphery. In a preferred embodiment, station 46 comprises means for applying a low temperature solder or brazing material to the tube and its seam. While any suitable technique may be used for applying the solder or brazing material, it is desirable to use one that substantially fills the seam 44 and applies a coating having a substantially uniform thickness about the tube outer periphery. To this end, it has been found to be particularly desirable to pass the tube assembly 37 through the meniscus of a wave of solder or brazing material. An alternative technique for sealing the tube seam and applying the coating layer that may be used is to pull the tube assembly 37 through a bath of molten solder or brazing material.

After the coating 47 has been applied to the tube assembly 37, the coated tube assembly may be passed through a cooling apparatus 48 such as an air or water quench. By doing this, the sealing material quickly solidifies and the amount of time that the fiber or fibers 26 are exposed to the elevated temperatures associated with the sealing operation is reduced.

An outer, coaxial tube 50 is then formed about the coated tube assembly 37 to provide the improvements of the present invention. It has been found to be desirable from a hermeticity stand point to form the tube 50 so that its seam 66 is about $180°$ opposed to the seam 44 of the inner tube 14. Fabrication of the tube 50 may be done by providing a second tape material 52 on a pay-off reel 54. The tape material 52 again comprises any suitable metal or metal alloy known in the art. As before, the tape material 52 is preferably payed off the reel 54 and wound about the sheaves 56 and

0173582
15070-MB

58 of an accumulator 60. From the accumulator, the tape material 52 is pulled through a tube forming apparatus 62 by any suitable tensioning means known in the art such as the take-up reel 38 or a capstan 64. If a capstan is used to apply the pull force to the tape material 52, it may used in a manner similar to that previously described. Prior to pulling the tape material 52 through the tube forming apparatus 62, it is preferred to clean the tape material and apply a flux lubricant thereto. Here again, any suitable cleaning technique known in the art may be used to clean the tape material and the flux lubricant may be applied to the tape by any conventional flux applying apparatus 63 known in the art.

The tube forming apparatus 62 may comprise any suitable tube forming apparatus known in the art capable of forming a tube that closely surrounds the coated tube assembly 37. It is also desirable for the tube forming apparatus to be capable of forming a tube having a generally longitudinally extending, substantially closed seam 66. As previously mentioned, such a seam facilitates sealing of the tube, assists in providing a hermetic and improves the strength which can be imparted to the tubular structure. In a preferred embodiment of the apparatus of the present invention, the tube forming apparatus 62 comprises one or more tube forming dies such as those previously described in connection with the tube forming apparatus 36.

After the tube 50 has been formed, it and the encapsulated coated tube assembly 37 are passed through a sealing station 68. The sealing operation performed by the station 68 is intended to provide several important aspects of the present invention.

First, it seals the seam 66 in the tube 50 so that a desired hermetic structure is formed. Second and most importantly, it causes the coating 47 to remelt and bond the tubes 14 and 50 together. By bonding the tubes together in this manner, a heavy wall, unitary tubular structure 69 having any desired wall thickness and any desired cross sectional area can be fabricated. This is particularly advantageous in that it means that the unitary tubular structure protecting the fiber or fibers can be provided with any desired strength level and any desired current carrying capability.

The sealing station 68 used to seal the seam 66 and remelt the coating 47 may comprise any suitable sealing apparatus known in the art capable of generating the temperatures needed to remelt the coating 47. In a preferred embodiment of the present invention, the station 68 comprises means for applying a solder or a brazing material to the tube 50 to seal the seam 36. Unlike the sealing station 46, it is not necessary for the sealing means 68 to apply a substantially uniform coating of sealing material about the outer periphery of the tube 50. While any suitable solder or brazing material applying means may be used to seal the seam 66, it is preferred to use a wave soldering apparatus. After passing through the sealing station 68, the tubular structure 69 preferably passes through a cooling apparatus 72 such as an air or water quench to solidify the sealing material and limit the exposure time of the encapsulated fiber or fibers 26 to the elevated temperatures produced by the sealing operation.

Prior to being wound upon the take-up reel 38, one or more protective layers 70 may be fabricated about the tubular structure 69 if desired. The protective layer or layers 70 may be formed from any suitable material in any desired manner. For example, at least one protective layer 70 may be a plastic coating extruded about the strcture by a suitable forming means 74 such as an extrusion die. Where the structure 69 is intended to act as an electrical conductor, the plastic coating may function as a dielectric material as well as a protective structure.

The tape materials 16 and 52 used to form the tubes 14 and 50 may comprise a single length of material or may be a plurality of lengths joined together. If either of the tape materials comprises a plurality of joined lengths, the lengths may be joined together in any suitable manner.

As previously mentioned, the tape materials 16 and 52 comprise a metal or metal alloy strip material. The particular metal or metal alloy chosen for each tape material preferably exhibits the strength and/or electrical conductivity properties needed to meet the desired strength levels and/or current carrying capability. In addition to these properties, it is also desirable for the selected tape material to exhibit good resistance to softening upon short term exposure to elevated temperatures and to be capable of sustaining the coiling forces accompanying fabrication and installation. A number of metal and metal alloys such as copper and its alloys and stainless steel and its alloys possess the required combination of properties and may be used for the tape materials. Again, selection of a particular material does depend upon the ultimate use for the cable assembly. Where conductivity is of particular importance, it is preferred to use copper or a copper alloy for one or both of the tape materials. Suitable copper alloys include copper alloys C19400, C19500, C63800, C68800 and copper alloy 151, a copper-zirconium alloy manufactured and sold by Olin Corporation. If desired, the tape materials 16 and 52 could be different materials which together form a composite having a desired set of strength and electrical conductivity properties.

In carrying out the invention described herein, it has been found to be particularly useful for the tape materials to have a transverse cross sectional area which exceeds the desired tube cross sectional area. The tape cross sectional area should exceed the desired tube cross sectional area by about 5% to about 40%, preferably by about 8% to about 30%, and most preferably by about 10% to about 25%. Using the die forming techniques described in the aforementioned Winter et al. patents, the extra volume of metal or metal alloy provided by this excess cross sectional area shows up essentially as longitudinal extension in the resulting tube. In addition, it has been found that there is no significant change in wall thickness caused by this type of tube forming technique. Consequently, the wall thickness of each tube is substantially the same as that of its respective starting tape material. The total length of each tube has been found to be greater than the length of its respective starting tape material by an amount substantially corresponding to the aforenoted percentage differentials in strip cross sectional area versus tube cross sectional area.

The extra volume of tape material also assists in the formation of a tube having a relatively tight seam characterized by closely abutting, non-linear, intermeshing edges. The tube is further characterized by the absence of a well or a notch at the outer periphery of the seam. The non-linear, intermeshing edges are particularly advantageous in that they provide an increased surface area to which a sealing material can adhere. This improves the overall hermeticity of the sealed tubular structure and results in improved seal strength.

It also has been found to be desirable for the tape materials to be in a wrought and partially work hardened condition when a die forming technique is used to form the tubes 14 and 50. Each tape material should preferably be at least about $1/4$ hard and most preferably, at least about full hard.

While the optical fiber cable formed in accordance with the present invention has been illustrated in Figure 2 without any filler material surrounding the fiber or fibers in the tubular structure, the use of an approriate filler material can be desirable in cable constructions which are to be subjected to high bending or hydrostatic stresses. A filler material generally has two functions. First, it lubricates the fiber or fibers to prevent stiction and bending. Second, it provides the fiber or fibers with a hydrostatic, ambient pressure environment. When used, the filler material preferably comprises a non-setting void filler such as a gel, however, any suitable non-setting void filler known in the art may be used. A technique for substantially simulataneously inserting both a filler material and at least one optical fiber into a forming encapsulation tube is illustrated in the aforementioned U.S. Patent No. 4,508,423 to Winter et al.

The solder or brazing materials used to seal the seams 44 and 66 and form the coating 47 may comprise any suitable solder or brazing material known in the art. Preferred sealing materials include silver and its alloys such as silver solder and tin and its alloys such as tin-lead solders and tin-antimony solders.

While the unitary tubular structure 69 has been illustrated as being formed by two drawn tubes bonded together, it should be recognized that it could also be formed by more than two tubes bonded together. Where there are more than two drawn tubes forming the tubular structure, all of the tubes except the outermost tube should have a coating layer applied to their outer periphery.

While it is preferred to use flat strip materials to form the tubes 14 and 50, it is possible to use strip materials having a preformed configuration such as a U-shaped cross section for the tape materials 16 and 52.

While the tubular structure 69 has been described as being used as an electrical conductor, it may also be used as part of a signal device for providing warning of cable tampering.

An optical fiber cable fabricated in accordance with the present invention theoretically can have a substantially infinite length. It is possible to fabricate cable lengths of about 25 km. between repeaters using the technique described herein.

The cable of the present invention can be used in underground, aboveground and undersea environments as well as in other applications. For example, the cable of the present invention may be used to supply data support and power to a deep sea sensor or in telephone applications.

While separate tube forming stations and separate sealing stations have been illustrated in Figure 1, it is possible to form both tubes and seal both tube seams using a single tube forming station and a single sealing station. To do this, it would be necessary to form the cable in a piecemeal fashion by shutting the assembly line down after the coated tube assembly 47 had been completed and restarting it with the coated tube assembly 47 being substituted for the fiber or fibers 26. In such a situation, it is not necessary to wrap the coated tube assembly about an accumulator. It should be noted, however, that the preferred technique for forming the optical fiber cable of the present invention is to form the inner tube 14, apply the coating 47, form the outer tube 50 about the hot coating 47, and seal its seam 66 while the coating 47 is still hot. Obviously, this technique is best performed using a continuous line operation with separate stations for each step.

While it is preferred to form the tube 50 so that it has an inner periphery as close as possible to the outer periphery of the coated assembly 47, there may be a slight tolerance between the outer periphery of the assembly 47 and the inner periphery of the tube 50. It is preferred to keep this tolerance between about 0.001" (25.4μm) and about 0.002" (50.8μm).

While it is preferred to encapsulate a buffered optical fiber, it is also possible to use the technique of the present invention to encapsulate a non-buffered optical fiber. An optical fiber having a ceramic or other organic barrier layer may be encapsulated by the present technique.

It is apparent that there has been provided in accordance with this invention a novel process and apparatus for forming a heavy wall optical fiber cable which fully satisfy the objects, means, and advantages set forth hereinbefore. While the invention has been described in combination with specific embodiments thereof, it is evident that many alternatives, modifications, and variations will be apparent to those skilled in the art in light of the foregoing description. Accordingly, it is intended to embrace all such alternatives, modifications, and variations as fall within the scope of the appended claims.

## CLAIMS

1. A method of forming an optical fiber communication cable, which comprises forming a longitudinally seamed tube (14) from a metal or alloy strip (16), depositing into said tube (14) as it is formed one or more optical fibers (26), and thereafter sealing the seam (44) in said tube with a molten sealant comprising a metal or alloy having a melting point lower than that of the tube, characterised in that, during the sealing step, the sealant metal or alloy is applied over the whole circumference of said tube to form a coating (47) thereon, and wherein, following solidification of said coating, there is formed around the tube (14) a second tube (50) of the same or different metal or alloy likewise having a longitudinal seam (66) therein, that second seam thereafter being sealed by application of a molten sealant thereto, that second sealant being applied to the second tube (50) under conditions effective to remelt the sealant coating (47) on the first tube which then bonds the two tubes together into a unitary structure encasing the optical fiber or fibers.

2. A method according to claim 1, characterised in that the seamed tubes (14,50) are formed by drawing an elongated metal or alloy strip (16,52) through a tube forming die (36,62) which brings the opposite longitudinal edges of each strip into close proximity thereby to form a substantially closed longitudinal seam in each tube.

3. A method according to claim 1 or 2, characterised in that the first tube (14) is sealed and coated with said sealant metal or alloy by drawing the tube through a bath (46) of the molten sealant.

4. A method according to claim 1, 2 or 3, characterised in that the second tube (50) is sealed by drawing the two tubes, one inside the other, through a bath (68) of molten sealant and which is at a temperature sufficient to remelt the first sealant and thereby bond the two tubes together.

5. A method according to any one of claims 1-4, characterised in that the second tube (50) is formed with its seam (66) at 180° to the seam (44) in the first tube.

0173582

6. A method according to any one of claims 1-5, characterised in that, following sealing of the second tube, a protective non-metallic layer (70) is formed around the outer tube.

7. An optical fiber communication cable comprising a drawn metal or alloy tube (14) having a longitudinal seam (44) sealed with a metal or alloy sealant (47) said tube (14) having one or more optical fibers (26) located axially therein, characterised in that said tube (14) has a second drawn metal or alloy tube (50) located therearound, said second tube likewise having a longitudinal seam (66) sealed with a sealant, the first mentioned sealant (47) serving also to bond the two tubes together into a unitary structure.

8. An optical fiber communication cable according to claim 7, characterised in that the seams (44,66) in the two tubes (14,50) are at 180° to each other.

9. An optical fiber communication cable according to claim 6, 7 or 8, characterised in that the outer tube (50) is encased by a further non-metallic protective coating (70).

10. Apparatus for forming optical fiber communication cables comprising means (36) for forming a metal or alloy strip into a seamed tube, means (36) for inserting an optical fiber into the tube as it is formed, and means (46) for sealing the seam in said tube, characterised in that the sealing means (46) are effective to apply said sealant over the whole surface of the tube, and wherein a second tube forming means (62) is provided for forming a second seamed tube of metal or metal alloy coaxially about the first tube, and a second sealant applying means (68) is provided for applying a sealant to the seam in said second tube, and remelting the first sealant on the surface of the first tube, thereby to bond the two tubes together.

11. Apparatus according to claim 10, characterised in that the two tube forming means (36,62) are tube forming dies through which the metal or alloy strips are drawn by means of drawing devices (40,64).

22　　　　　　　　0173582

12.　　Apparatus according to claim 10 or 11, wherein the sealing means 46 and/or the sealing means 72 comprise a bath of molten sealant, and means (38) for pulling the seamed tube or tubes through the bath or baths.

13.　　Apparatus according to any one of claims 10-12, incuding means (74) for applying an outer non-metallic protective layer to the outer tube following sealing threof and bonding together of the two tubes.

FIG-1

FIG-2